# EUROPEAN PATENT APPLICATION

(11) **EP 4 628 440 A1**
(43) Date of publication of application: **08.10.2025**
(21) Application number: 24879901.7
(22) Date of filing: 05.08.2024
(51) Int. Cl.: B65H 75/24, H01M 4/04

(54) **SPACER FOR ASSISTING WINDING CORE USED IN BATTERY SLITTING PROCESS AND STRUCTURE INCLUDING SPACER**

(30) Priority: 16.10.2023 KR 20230137786
(71) Applicant: LG Energy Solution, Ltd., Seoul 07335 (KR)
(72) Inventor: LEE, Jongseok, Daejeon 34122 (KR)
(74) Representative: Plasseraud IP
(86) International application number: PCT/KR2024/011467
(87) International publication number: WO 2025/084561

(57) **Abstract**

A spacer according to an embodiment of the present invention is a spacer for assisting a winding core used in a unit electrode roll generated during a slitting process of a battery. The spacer may be a cylindrical shape having a hollow part having open upper and lower parts and be coupled to the winding core so as to provide a structure corresponding to the width of a slitting lane. Here, the spacer may include multiple grooves arranged along an upper surface or a lower surface thereof which is in contact with the winding core, and the multiple grooves may include magnetic bodies therein.

## Description

### Cross-Reference to Related Applications

The present application is a national phase entry under 35 **U.S.C.** § 371 of International Application No. PCT/KR2024/011467 filed August 5, 2024, which claims priority fromKorean Patent Application No.10-2023-0137786 filed in the Korean Intellectual Property Office on October 16, 2023, the entire contents of which are incorporated herein by reference.

### Technical Field

The present disclosure relates to a spacer for assisting a winding core and a structure including the spacer, and more particularly, to a spacer for assisting a winding core used during a slitting process and a structure including the winding core and the spacer.

### Background

Secondary batteries, capable of recharging and reuse, can be used as an energy source for small devices such as mobile phones, tablet PCs, and vacuum cleaners, and also used as an energy source for medium and large devices such as personal mobility, automobiles, and an energy storage system (ESS) for smart grids. Secondary batteries may be applied to a system in a form of an assembly such as a battery module in which a plurality of battery cells is connected in series and parallel or a battery pack in which battery modules are connected in series and parallel according to system requirements.

Batteries may be broadly categorized into cylindrical, pouch, and prismatic types depending on their shapes. These batteries are the same in that they are manufactured by combining the separator and the electrolyte after manufacturing a cathode plate and an anode plate, but they may have different shapes depending on how they are assembled and packaged.

Generally, batteries can be manufactured through an electrode process, an assembly process, and an activation/test process. Meanwhile, the slitting process included in the electrode process is a process of cutting the manufactured electrode to a specification, and different slitting lane widths and related equipment need to be applied depending on the specification.

### Technical Problem

To obviate one or more problems of the related art, aspects of the present disclosure provide a spacer for assisting a winding core used during a battery slitting process.

To obviate one or more problems of the related art, aspects of the present disclosure also provide a structure including the winding core used during a battery slitting process and the spacer assisting the winding core.

### Technical Solution

In order to achieve the objective of the present disclosure, a spacer for assisting a winding core, which is used in a unit electrode roll produced during a slitting process of a battery, may be cylindrical with a hollow center portion open at the upper and lower portions and provides a structure corresponding to a slitting lane width by being combined with the winding core.

The spacer may include a plurality of recesses arranged along an upper surface or a lower surface that contacts the winding core.

Here, the plurality of recesses may include three or more recesses which are arranged at equal intervals along the upper surface or the lower surface that contacts the winding core.

Each of the recesses may include a magnetic material therein and the magnetic material may include a neodymium (neodym) magnet.

The magnetic materials of the spacer may be magnetically bonded to a plurality of magnetic materials arranged on an outer diameter of the upper surface or the lower surface of the winding core so that the spacer and the winding core integrally form the structure corresponding to the slitting lane width.

Meanwhile, the winding core may be cylindrical with a hollow center portion open at the upper and lower portions and the height of the cylindrical spacer is set so that, when the cylindrical spacer is combined with the winding core, the sum of the height of the cylindrical spacer and the height of the winding core corresponds to the slitting lane width.

According to another aspect of the present disclosure, a support structure used in a slitting process of a battery may include a winding core for providing a center of a unit electrode roll generated during the slitting process; and a spacer that is cylindrical with a hollow center portion open at the upper and lower portions and provides a structure corresponding to a slitting lane width by being combined with the winding core.

The spacer may include a plurality of recesses arranged along an upper surface or a lower surface that contacts the winding core.

The plurality of recesses may include three or more recesses which are arranged at equal intervals along the upper surface or the lower surface that contacts the winding core.

Each of the recesses may include a magnetic material therein.

The magnetic materials of the spacer may be magnetically bonded to a plurality of magnetic materials arranged on an outer diameter of the upper surface or the lower surface of the winding core.

The spacer and the winding core integrally form the structure corresponding to the slitting lane width.

The winding core may be cylindrical with a hollow center portion open at the upper and lower portions and the height of the cylindrical spacer is set so that, when the cylindrical spacer is combined with the winding core, the sum of the height of the cylindrical spacer and the height of the winding core corresponds to the slitting lane width.

Plurality of recesses corresponding to the plurality of recesses arranged on one surface of the spacer may be formed on the upper surface or the lower surface of the winding core.

Each of the plurality of recesses of the winding core may include a magnetic material therein.

The plurality of recesses arranged on the upper surface or the lower surface of the winding core may include three or more recesses arranged at equal intervals along the surface that contacts the spacer.

### Advantageous Effects

According to aspects of the present disclosure, a slitting process corresponding to various slitting widths can be performed in a very simple manner by using assist spacers of various sizes to be attached to a winding core of a certain standard.

### Brief Description of the Drawings

FIG. 1 is a schematic diagram of a battery manufacturing process to which the present disclosure may be applied.
FIG. 2 is a conceptual diagram of a slitting process to which the present disclosure may be applied.
FIG. 3A is a cross-sectional side view of a winding core according to aspects of the present disclosure.
FIG. 3B is a cross-sectional side view of a spacer according to aspects of the present disclosure.
FIG. 4 is a cross-sectional side view of a support structure used in a slitting process of batteries according to aspects of the present disclosure.
FIG. 5 is a layout diagram of magnets inserted into recesses of a core and a spacer according to an aspect of the present disclosure.
FIG. 6 is a layout diagram of magnets inserted into recesses of the core and spacer according to another aspect of the present disclosure.
FIG. 7 shows a shape in which a winding core and an assist spacer according to aspects of the present disclosure are coupled to a rotating roller.

### Detailed Description

The present disclosure may be modified in various forms and have various aspects, and specific aspects thereof are shown by way of example in the drawings and will be described in detail below. It should be understood, however, that there is no intent to limit the present disclosure to the specific aspects, but on the contrary, the present disclosure is to cover all modifications, equivalents, and alternatives falling within the spirit and technical scope of the present disclosure. Like reference numerals refer to like elements throughout the description of the figures.

It will be understood that, although the terms such as first, second, **A, B,** and the like may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes combinations of a plurality of associated listed items or any of the plurality of associated listed items.

It will be understood that when an element is referred to as being "coupled" or "connected" to another element, it can be directly coupled or connected to the other element, or an intervening element may be present. In contrast, when an element is referred to as being "directly coupled" or "directly connected" to another element, there is no intervening element present.

The terms used herein is for the purpose of describing specific aspects only and are not intended to limit the present disclosure. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present disclosure belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary aspects of the present disclosure will be described in detail with reference to the accompanying drawings.

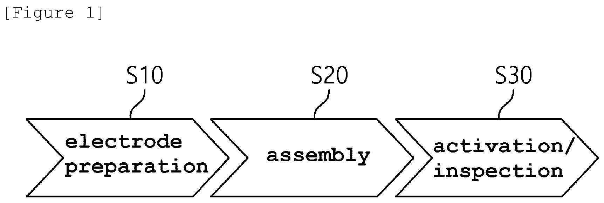

FIG. 1 is a schematic diagram of a battery manufacturing process to which the present disclosure may be applied.

Batteries may be manufactured through processes including electrode preparation (S10), assembly (S20), and activation/inspection (S30). The battery manufactured through these processes is shipped in the form of a battery pack (or battery module) containing a plurality of battery cells connected in series. The battery pack may be connected to a load through positive and negative terminals and perform charging/discharging operations. Battery packs may be configured to be connected in series/parallel depending on the requirements of a system in which the battery is used.

More specifically, the electrode preparation process (S10) may proceed in the following order: a 'mixing process' for mixing raw materials, followed by a 'coating process' for applying the mixed slurry to a foil and drying it, a 'roll pressing process' for compressing the electrode to reduce the thickness of the electrode, a 'slitting process' for cutting the electrode to a preset width, and a 'notching process' for creating a tab on the electrode.

Here, the slitting process is a process of cutting the electrode according to the size of the battery after the electrode is thinly spread through the roll pressing process, which is a process of cutting the electrode vertically using a slitter according to the designed battery specifications. Here, a blade of the slitter may vary depending on the size of the battery cell to be manufactured.

The assembly process (S20) is a process of making a finished cell by assembling the positive and negative plates manufactured through the electrode process with a separator. The manufacturing sequence may be different depending on the battery type (cylindrical, pouch, prismatic), and the technology applied by each manufacturer may also be different. The assembly process (S20) may typically include detailed processes such as a stacking process in which multiple electrode plates are stacked one after another with a separator between them, a tab welding process in which current flowing from a single electrode plate is concentrated in one place, and a packaging process in which the final battery shape is formed and sealed after electrolyte injection.

In addition, the activation/inspection process (S30) is a process to activate electric energy and verify stability. The activation process may be performed by repeatedly aging and charging/discharging. In the 'aging' process, the battery is stored at room temperature with a constant temperature and humidity so that the electrolyte permeates the anode and cathode. When the electrolyte is dispersed inside the battery and ion movement between the anode and cathode becomes smooth, the battery is partially charged to activate the cell. Here, all lithium ions move to the anode and the electrolyte decomposes, forming a thin, ion-conductive solid film on the anode electrode surface, which is 'Solid Electrolyte Interphase (SEI)' layer. Afterwards, the battery that has undergone the activation process undergoes a process of testing the charging capacity and sorting out defective batteries before being shipped.

The assist spacer according to aspects of the present disclosure and a structure including a winding core and the spacer for assisting the winding core may be applied to a slitting process of an electrode preparation process during the battery manufacturing process.

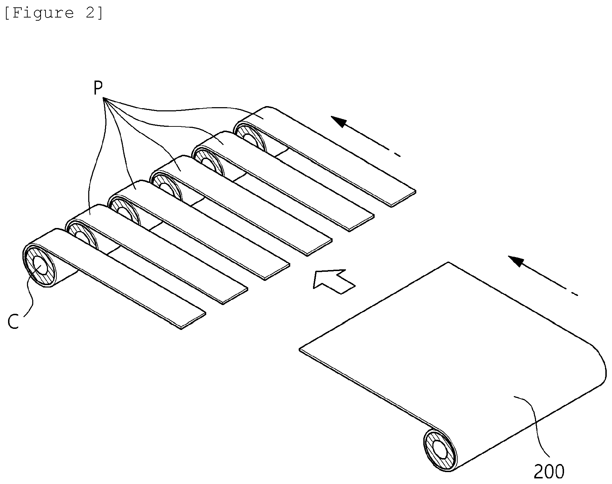

FIG. 2 is a conceptual diagram of a slitting process to which the present disclosure may be applied.

The slitting process may be performed on a jumbo roll (200) with a form in which a thinly spread electrode that has been discharged through a roll pressing process is wound. An electrode sheet on which electrode active material has been applied and dried is wound in a roll shape on the jumbo roll (200). Here, it can be understood that the electrode sheet on which the electrode active material has been applied and dried is a coated electrode sheet after completing the coating process.

For the slitting process, the electrode sheet wound in a roll shape is unwound by rotation. Referring to FIG. **2****,** the jumbo roll (200) is unwound by rotation of the unwinding roller (U) and the unwound electrode is cut by a slitting device installed in each slitting lane in the returning process to form a plurality of unit electrode sheets. Each of the plurality of unit electrode sheets is wound by a rewinder. The rewinder may include a cylindrical winding core (C) for winding a unit electrode sheet.

Here, the winding core of the rewinder may be used to wind the unit electrode sheet for each slitting lane and the width of the winding core may also vary depending on the specification of the electrode being slit. As illustrated in FIG. **2****,** as the slitting process progresses, a unit electrode roll (P; also known as a pancake) may be generated for each slitting lane.

Meanwhile, the slitting process may include not only a process of cutting a jumbo roll into a plurality of unit electrode sheets, but also a slitting process of additionally cutting one unit electrode sheet to form a plurality of sub-unit electrode sheets, by which sub-unit electrode rolls are formed as a result of the slitting process.

Here, when the width of the winding core required according to the specifications varies, according to prior art, a new core suitable for the specifications was newly ordered, manufactured and used, or an auxiliary body was added to a winding core of the same specifications by welding, etc. Accordingly, a problem arose in which considerable time and cost were required to manufacture a new slitting core or combine an auxiliary body.

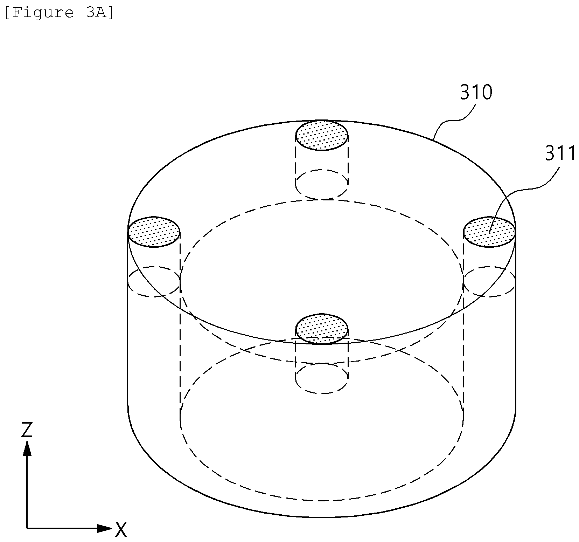

FIG. 3A is a cross-sectional side view of a winding core according to aspects of the present disclosure.

The winding core according to aspects of the present disclosure may be used to form a unit electrode roll produced during a slitting process of batteries.

Referring to FIG. 3A, the winding core according to aspects of the present disclosure may be a cylindrical shape having a hollow center portion with upper and lower portions open. The winding core of a unit electrode roll (pancake) applied to a slitting process of a battery typically has a height of 70 mm (Z direction of FIG. 3A). Here, the 'height' of the winding core may also be referred to as a 'width' depending on the direction in which it is placed when applied to a slitting lane.

The winding core has a hollow portion penetrating the upper surface and the lower surface based on the cylindrical shape, and accordingly, each of the upper surface and the lower surface may have a ring or circular band shape formed along the circumference.

According to aspects of the present disclosure, a plurality of recesses may be formed on a ring formed on an upper surface or a lower surface of the winding core that is in contact with a spacer according to aspects of the present disclosure. In the aspect illustrated in FIG. 3A, four recesses are formed on the surface of the ring formed on the upper surface. The four recesses may be arranged at equal intervals on the ring formed along the circumference. Meanwhile, the recesses formed on one surface of the winding core may be arranged in a number of three or five or more. Here, it is preferable that the number of recesses formed on one surface of the winding core is the same as the number of recesses formed on one surface of the spacer.

In addition, the recess formed on one surface of the winding core may include a magnetic material inserted therein. Here, according to one aspect, the magnetic material may be a neodymium (or neodym) magnet.

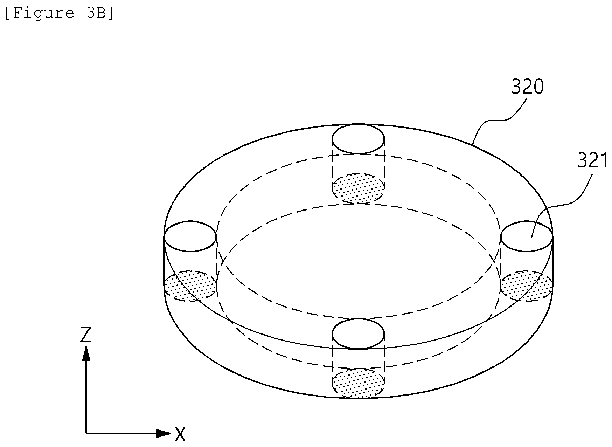

FIG. 3B is a cross-sectional side view of a spacer according to aspects of the present disclosure.

The spacer according to aspects of the present disclosure may be an assist spacer that provides a structure corresponding to a slitting lane width by being combined with the winding core according to aspects of the present disclosure. Here, corresponding to the slitting lane width may mean that the structure is formed with a size smaller than the slitting lane width by a gap so that the structure can be installed inside the slitting lane.

Referring to FIG. 3b, the spacer according to the aspect of the present disclosure may be a cylindrical shape having a hollow portion with upper and lower portions open. The spacer may serve to expand the height (Z direction of FIG. 3b) of the winding core to suit the slitting lane width of the battery and may be provided in various heights such as 5 mm, 10 mm, and 15 mm depending on the battery specifications. Here, the 'height' of the spacer may also be referred to as 'width' depending on the direction in which it is placed when applied to the slitting lane.

The spacer has a hollow portion penetrating the upper surface and the lower surface based on the cylindrical shape, and accordingly, each of the upper surface and the lower surface of the spacer may have a ring or circular band shape formed along the circumference.

A plurality of recesses may be formed on the ring formed on the upper surface or the lower surface of the spacer according to the aspect of the present disclosure, wherein the upper surface or the lower surface contacts the winding core according to the present disclosure. In the aspect shown in Fig. 3b, four recesses are formed on the surface of the ring formed on the lower surface. The four recesses may be arranged at equal intervals on the ring formed along the circumference. Meanwhile, the recesses formed on one surface of the spacer may be arranged in a number of three or five or more. Here, it is preferable that the number of recesses formed on one surface of the spacer is the same as the number of recesses formed on one surface of the winding core.

Here, the recess formed on one surface of the spacer may include a magnetic material inserted therein. According to an aspect, the magnetic material may be a neodymium (or neodym) magnet.

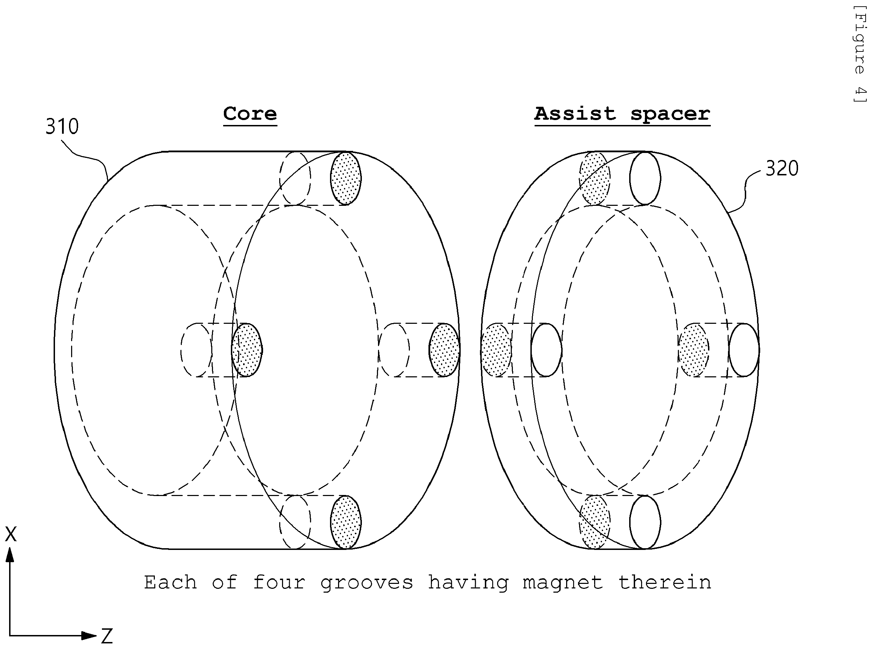

FIG. 4 is a cross-sectional side view of a support structure used in a slitting process of batteries according to aspects of the present disclosure.

Referring to FIG. 4, the support structure used in the slitting process of batteries of the present disclosure may include a winding core (310) providing a center of a unit electrode roll (pancake) and a spacer (320) having a cylindrical shape with a hollow center portion open at the upper and lower portions and providing a structure corresponding to a slitting lane width by being combined with the winding core.

Here, the height (z direction) of the cylindrical spacer (320) may be set so that when the cylindrical spacer (320) is coupled with the winding core, the sum of the height of the cylindrical spacer and the height of the winding core corresponds to the slitting lane width. Accordingly, the support structure may provide a center of a unit electrode roll according to the present disclosure. The unit electrode roll according to the present disclosure may rotate around the support structure according to the rotation of the roller which is inserted in the middle of the support structure.

Here, the spacer may include a plurality of recesses arranged along the upper surface or the lower surface that contacts the winding core. The plurality of recesses of the spacer may include three or more recesses arranged at equal intervals along the upper surface or the lower surface that contacts the winding core, and preferably may include four recesses as in the example illustrated in FIG. **4****.** Each recess may include a magnet. Here, the magnet may include a neodymium (neodym) material.

Accordingly, the plurality of magnets of the spacer may be magnetically bonded to the plurality of magnets arranged on the outer diameter of the upper surface or the lower surface of the winding core, so that the spacer and the winding core may form a support structure integrally.

Meanwhile, a plurality of recesses corresponding to the plurality of recesses arranged on one side of the spacer may be formed on the upper surface or the lower surface of the winding core, and each of the plurality of recesses may include a magnetic substance therein.

The plurality of recesses arranged on the upper surface or the lower surface of the winding core may include three or more recesses arranged at equal intervals along the surface that contacts the spacer. Preferably, the plurality of recesses may include four recesses, as in the example illustrated in FIG. 4.

Here, the number of recesses arranged on the upper surface or lower surface of the winding core and the magnets inserted therein and the number of recesses arranged at equal intervals along the upper surface or lower surface of the spacer and the magnets inserted therein may be set to be the same. However, for example, an aspect in which six recesses and magnetic substances are installed on the winding core and three recesses and magnetic materials are installed on the spacer, and three of the six magnetic materials of the winding core may be interlocked with the magnetic materials of the spacer, is also possible. Furthermore, an aspect is also possible in which the number of magnets arranged in the spacer is greater than the number of magnets arranged in the winding core.

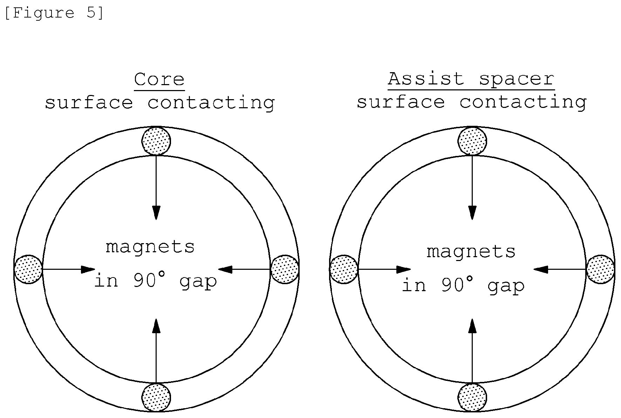

FIG. 5 is a layout diagram of magnets inserted into recesses of a core and a spacer according to an aspect of the present disclosure.

On the left side of FIG. **5****,** a front view of a surface including a plurality of recesses, which is a surface that is in contact with an assist spacer among the upper surface and the lower surface of a cylindrical winding core, is illustrated. In addition, on the right side of FIG. 5, a front view of a surface including a plurality of recesses, which is a surface that is in contact with the winding core among the upper surface and the lower surface of the assist spacer, is illustrated.

In the aspect illustrated in FIG. 5, four recesses are installed at equal intervals along the circumference of the upper or lower surface of the winding core, and each recess includes a magnetic material (magnet). In addition, four recesses are installed at equal intervals along the circumference of the upper or lower surface of the assist spacer, and each recess includes a magnetic material (magnet).

Here, the number of recesses arranged on the upper surface or lower surface of the winding core and the magnets inserted therein and the number of recesses arranged at equal intervals along the upper surface or lower surface of the spacer and the magnets inserted therein may be set to be the same.

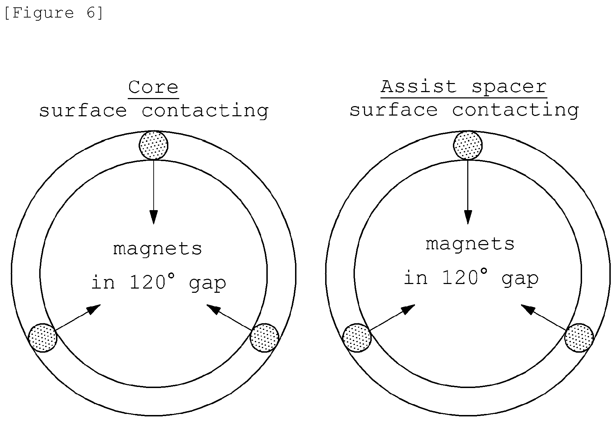

FIG. 6 is a layout diagram of magnets inserted into recesses of the core and spacer according to another aspect of the present disclosure.

On the left side of FIG. 6, a front view of a surface including three recesses arranged at equal intervals among the upper surface and the lower surface of the cylindrical winding core, which is in contact with the assist spacer, is illustrated. In addition, on the right side of FIG. 6, a front view of a surface including three recesses arranged at equal intervals among the upper surface and the lower surface of the assist spacer, which is in contact with the winding core, is illustrated.

In the aspect illustrated in FIG. 6, three recesses arranged at equal intervals along the circumference of the upper surface or lower surface of the winding core are installed, and each recess includes a magnetic material (magnet). In addition, three recesses are installed along the circumference of the upper surface or the lower surface of the assist spacer, and each recess includes a magnetic material (magnet).

Here, the number of recesses arranged on the upper surface or lower surface of the winding core and the magnets inserted therein and the number of recesses arranged at equal intervals along the upper surface or lower surface of the spacer and the magnets inserted therein may be set to be the same. However, for example, an aspect in which six recesses and magnets are installed on the winding core and three recesses and magnetic materials are installed on the spacer, and three of the six magnetic materials of the winding core may be combined with the magnetic materials of the spacer, is also possible. Furthermore, an aspect is also possible in which the number of magnets arranged in the spacer is greater than the number of magnets arranged in the winding core.

In FIGS. 5 and 6, aspects in which the winding core and the spacer include four or three recesses and magnetic materials are described, but the number of recesses and magnetic materials according to the present disclosure is not limited thereto and thus, the recesses and magnets may be installed in a number of five or more. However, it is suitable for improving the bonding force between the winding core and the spacer to be set in a plurality of recesses and magnets, and preferably, the number of recesses and magnets may be set in a number of three or more.

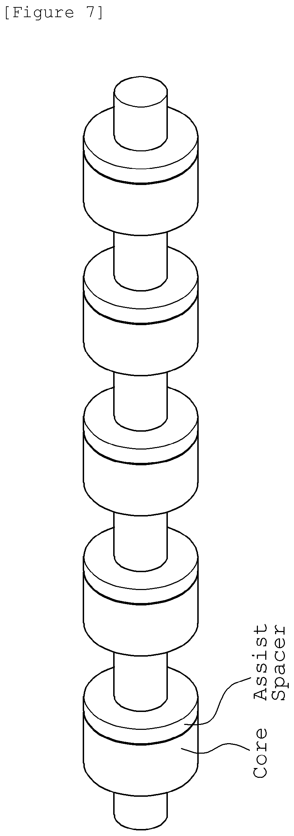

FIG. 7 shows a shape in which a winding core and an assisting spacer according to aspects of the present disclosure are coupled to a rotating roller.

As shown in FIG. 7, the winding core according to aspects of the present disclosure may be magnetically coupled to the assist spacer to be provided as a single structure, and a plurality of structures may be fitted to a rotating roller at a predetermined interval. By rotational movement of a rewinder roller coupled with a plurality of structures according to aspects of the present disclosure, a unit electrode may be wound or unwound with respect to the structure according to aspects of the present disclosure.

Although some aspects of the disclosure have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some aspects, one or more of the most important method steps may be performed by such an apparatus.

In the forgoing, the present disclosure has been described with reference to the exemplary aspect of the present disclosure, but those skilled in the art may appreciate that the present disclosure may be variously corrected and changed within the range without departing from the spirit and the area of the present disclosure described in the appending claims.

### Brief Description of Reference Numerals

P: unit electrode roll
C, 310: winding core
311: recess of winding core
320: assist spacer
321: recess of assist spacer

## Claims

1. A spacer for assisting a winding core used in a unit electrode roll, wherein the spacer is cylindrical and has a hollow center portion open at upper and lower portions thereof, and wherein the spacer, when combined with the winding core, provides a structure corresponding to a slitting lane width.

2. The spacer of claim **1,** wherein the spacer includes a plurality of recesses arranged along an upper surface or a lower surface thereof, and wherein the plurality of recesses is configured to contact the winding core.

3. The spacer of claim 2, wherein the plurality of recesses includes three or more recesses which are arranged at equal intervals along the upper surface or the lower surface.

4. The spacer of claim 2, wherein each recess of the plurality of recesses includes a magnetic material therein.

5. The spacer of claim 4, wherein the magnetic material includes a neodymium magnet.

6. The spacer of claim 4, wherein the magnetic material of each recess of the plurality of recesses is configured to be magnetically bonded to a plurality of magnetic materials arranged on an outer diameter of an upper surface or a lower surface of the winding core so that the spacer and the winding core integrally form the structure corresponding to the slitting lane width.

7. The spacer of claim 3, wherein the winding core is cylindrical with a hollow center portion open at upper and lower portions thereof, and wherein a height of the spacer is set so that, when the spacer is combined with the winding core, a sum of the height of the spacer and a height of the winding core corresponds to the slitting lane width.

8. A support structure for use in a slitting process of a battery, comprising:
a winding core for providing a center of a unit electrode roll generated during the slitting process; and
a spacer that is cylindrical with a hollow center portion open at upper and lower portions thereof,
wherein the spacer, when combined with the winding core, provides a structure corresponding to a slitting lane width.

9. The support structure of claim 8, wherein the spacer includes a plurality of recesses arranged along an upper surface or a lower surface thereof that contact the winding core.

10. The support structure of claim 9, wherein the plurality of recesses includes three or more recesses arranged at equal intervals along the upper surface or the lower surface that contact the winding core.

11. The support structure of claim 9, wherein each recess of the plurality of recesses includes a magnetic material therein.

12. The support structure of claim 11, wherein the magnetic material of each recess of the plurality of recesses is magnetically bonded to a plurality of magnetic materials arranged on an outer diameter of an upper surface or a lower surface of the winding core so that the spacer and the winding core integrally form the structure corresponding to the slitting lane width.

13. The support structure of claim 10, wherein the winding core is cylindrical with a hollow center portion open at upper and lower portions thereof, and wherein a height of the spacer is set so that, when the spacer is combined with the winding core, a sum of the height of the spacer and a height of the winding core corresponds to the slitting lane width.

14. The support structure of claim 9, wherein the winding core includes a plurality of recesses arranged on an upper surface or a lower surface thereof, the plurality of recesses of the winding core arranged so as to correspond to the plurality of recesses arranged on the upper surface or the lower surface of the spacer, and wherein each recess of the plurality of recesses of the winding core includes a magnetic material therein.

15. The support structure of claim 9, wherein the winding core includes a plurality of recesses arranged on an upper surface or a lower surface thereof, and the plurality of recesses of the winding core include three or more recesses arranged at equal intervals along a surface that contacts the spacer.
